# EUROPEAN PATENT APPLICATION

(11) **EP 4 710 754 A1**
(43) Date of publication of application: **18.03.2026**
(21) Application number: 24806721.7
(22) Date of filing: 10.05.2024
(51) Int. Cl.: A01G 25/02, A01G 29/00, A01C 23/02

(54) **AGRICULTURAL APPLICATOR**

(30) Priority: 12.05.2023 ES 202330830 U
(71) Applicant: Truyol Jara, Maria del Carmen, 28660 Boadilla Del Monte (Madrid) (ES); Molina Moreno, José Maria, 28229 Villanueva Del Pardillo (Madrid) (ES)
(72) Inventor: Truyol Jara, Maria del Carmen, 28660 Boadilla Del Monte (Madrid) (ES); Molina Moreno, José Maria, 28229 Villanueva Del Pardillo (Madrid) (ES)
(86) International application number: PCT/ES2024/070289
(87) International publication number: WO 2024/236210

(57) **Abstract**

An agricultural applicator (1) of the type that comprises a tube-shaped body (4) and carried out in biopolymers,with outlet holes (10, 11) of the elementto be applied; and which comprises upper die cuts (40) that form retainers for drip piping.

## Description

### OBJECT OF THE INVENTION

The present invention relates to an agricultural applicator, produced in various formats, usable for improving irrigation, planting and sowing, at a certain depth, protecting the water, seeds, nutrients and loads, from the temperature or erosion of the soil surface.

### BACKGROUND OF THE INVENTION

At present, the use of certain irrigation elements (pipes, diffusers, etc.) in agriculture is known, which are made from traditional plastics with a high content of polluting elements that do not respect the environment, such as PVC chlorine or polyolefins with degradability cycles of thousands of years.

Document KR101998681Bis known in regard to a perforated pipe for vegetation, manufactured with ecological materials to fundamentally prevent environmental pollution after discharge and facilitate the establishment and growth of trees. This document includes an agricultural applicator formed by a tube-shaped body with outlet holes for the different elements to be applied, such as water, nutrients, fertilizers, etc., materialized in the form of biopolymers. This applicator can also include additional loads of fertilizers, vegetables or reinforcement such as coconut fibers, a top cap and several layers of different degradability.

No device that is an agricultural applicator with the applicator configuration of the invention is known to the applicant.

### DESCRIPTION OF THE INVENTION

The agricultural applicator of the invention comprises a tube-shaped body and materialized in the form of biopolymers, with outlet holes of the principle or substance to be applied, and that according to the invention comprises upper die-cuts that are forming someretainers for the drippipe.

In this way, an applicator is obtained that allows the dosage and placement of the seeds, nutrients or irrigation, respectively, as well as the irrigation water directly to the root area, at the appropriate depth so as to optimize the use of water or the progressive dosage of nutrients in plantations and crops, but which has adequate resistance characteristics for its function, and also biodegradability that prevents soil contamination.

In addition, it provides the following advantages:
- It is a material that allows formulations, both flexible, very degradable, as well as rigid and resistant for use in several procedures, as is the case of pipes.
- An accidental breakage of a pipe when tilling the land will not contaminate the land or the crops, but the pieces will eventually degrade or compost over time.
- The formulation allows to regulate the degree of degradation desired over time, as well as the contribution of nutrients and additives resulting from the progressive decomposition of the applicator.
- Applicators can be designed with holes to let water through, or without them to
   accumulate water, with a formulation that adds mineral or vegetable fillers to its composition, making them hygroscopic to absorb and accumulate the maximum amount of water.
- Pipe applicators increase the efficiency of irrigation since on the one hand they transport the
   water to a depth away from the surface to prevent evaporation, and on the other allow the water to directly reach the roots. The earth above it acts as a thermal insulator, as well as a mantle to prevent evaporation. Water located at a depth, for example, of about twenty centimeters, encounters temperatures that can vary by twenty degrees with respect to the surface scorched by the sun. Avoiding water on the surface around the plant makes the growth
   of weeds more difficult.
- The material allows to design seedbeds or cartridges of various forms for the planting of species that require direct sowing in degradable seedbeds that also provide the nutrients of their composition.

### BRIEF DESCRIPTION OF THE DRAWINGS

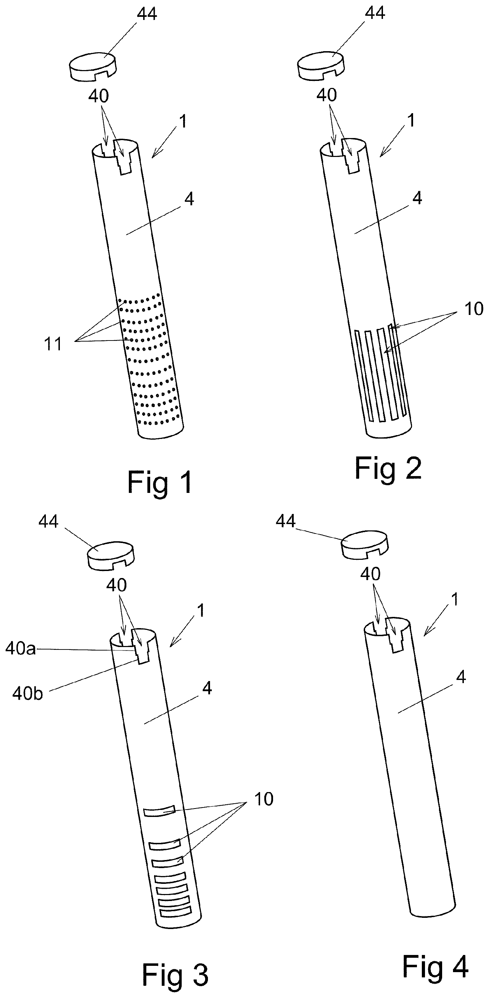

Figures 1 to 4 show two embodiments of the pipe applicator with both ends open or only the upper one and with some of the possible drainage grooves or in smooth termination, and with the upper die cut for housing the drip pipe, although it may not carry them.
Figure 5 shows an embodiment of an applicator in a band configuration, unwindable from a coil.
Figure 6 shows an embodiment of an applicator in sheet configuration, with built-in irrigation pipes,also unwindable from a coil.
Figure 7 shows an embodiment of the applicatorin sheet configuration similar to that shown in Fig. 6, without the built-in irrigation pipes.
Figure 8 shows a section of a crop with tubular applicators and drippers arranged in them.
Figure 9 shows a section of a crop with a band or sheet applicator.
Figure 10 shows a section of a crop with tubular applicators with elbow and drippers arranged in them.
Figure 11 shows the winding of an alveolar or multiwall sheet band applicator with a grooved section.

### DESCRIPTION OF A PRACTICAL EMBODIMENT OF THE INVENTION

The agricultural applicator (1) comprises a body in the form of a sheet (2), band (3), and in the invention, in the form of a pipe (4) and carried out in biopolymers with outlet holes (10, 11) of the principle or substance to be applied.

In addition, the body can comprise additional organic, mineral, or vegetable loads, such as hygroscopic mineral or vegetable loads, to help retain moisture in the root environment, or fertilizer loads, so that as the bioplastic degrades, it contributes fertilizers to the soil right in the area closest to the growth of the roots, or seed loads.

It can also comprise vegetable fillers or reinforcing fibers such as coconut or kenaf, which in addition to giving mechanical resistance can help to slowly increase the effect of degradation. Flexible applicators (band and sheets) can be used to support the soil on slopes until the plants and their roots grow.

Likewise, the body can comprise several layers of biopolymers of different degradability, thus deciding several stages of degradation and contribution of additives depending on the phases of plant growth. For example, the pipe applicator can comprise layers with different degree of degradability, to degrade with the growth of the plant and a layer that is the one that lasts for the irrigation of subsequent years.

The tube-shaped applicator (4) can have a variable length, with a minimum length of 15 centimeters, since this allows shallow deepening for superficial root plantations, as well as further deepening to transport the water to deeper roots such as trees.

At greater depths, irrigation water finds lower temperatures with respect to the surface scorched by the sun, minimizing evaporation. In addition, we avoid the presence of water on the surface around the plant, which makes the growth of weeds more difficult. The length of the applicator (4) will also depend on the needs of the height of the installation, depending on the type of crop, a few centimeters from the ground for small plant irrigation lines or higher to allow the work or passage of farmers under the irrigation pipes of the plantation.

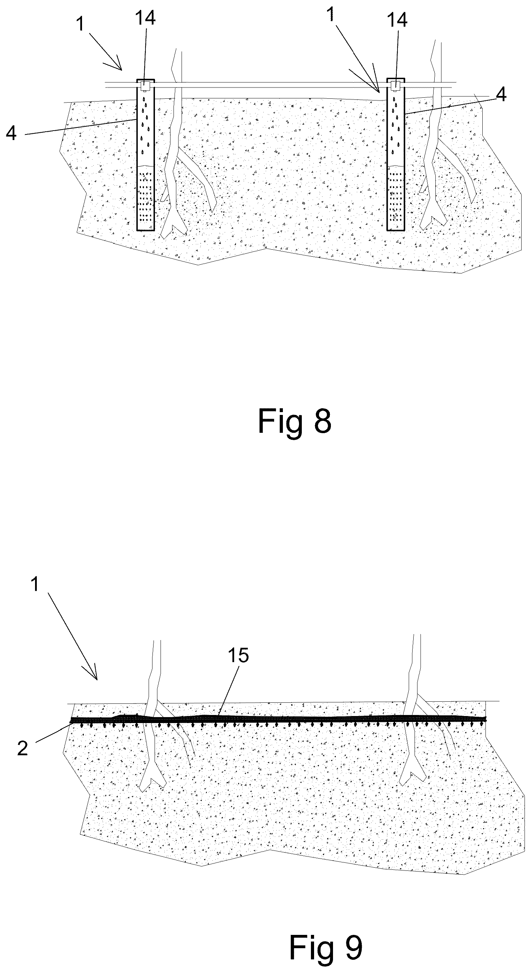

Likewise, it is preferred that the tube-shaped applicator (4) comprises upper die-cuts (40) that form retainers for the drip piping (14). In this way, each drip pipe of the section will pour into the pipe (4) in farms or large plantations (see Fig. 8). Said die-cuts (40) may have progressive sections according to cut-outs (40a, 40b) to adapt to pipes of different sections.

In addition, the tube-shaped applicator (4) may comprise irrigation outlet holes, which may be linear
(10) and/or pointed (11) (square, circular...), or even not have these die-cuts. In the case of linear holes (produced through the use of discs for example), they guarantee progressive drainage along the length or height of the pipes, this version being more recommended for water-intensive crops, such as lettuce. In addition, the tube-shaped applicator (4) may comprise an optional cap (44) to prevent evaporation, which further helps improve the fastening of the drip pipes.

The tube-shaped applicator can be rigid, and straight for vertical installation near the roots, or curved to reach the root from a point further away due to the need for the type of crop. These curved tubes can be flexible with a smooth profile, or corrugated similar to those used in the field of electrical facilities. In the case of rigid pipes, accessories in the form of an elbow (45) or curves of various degrees must be used for their correct positioning, these being similar to those existing in the world of plumbing for PVC pipes. To prevent the aeration of the roots as well as evaporation of water, external covers and/or siphon-shaped accessories, not shown, can be used, which would be buried.

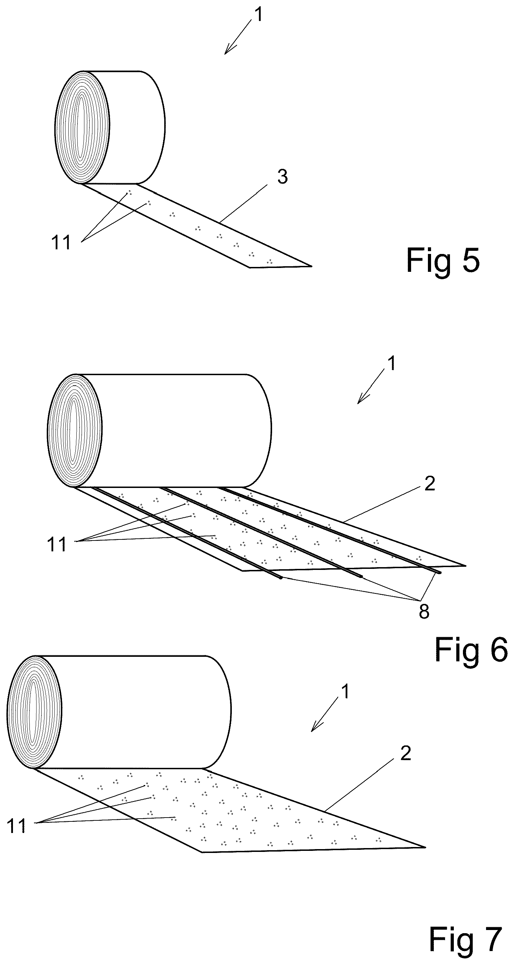

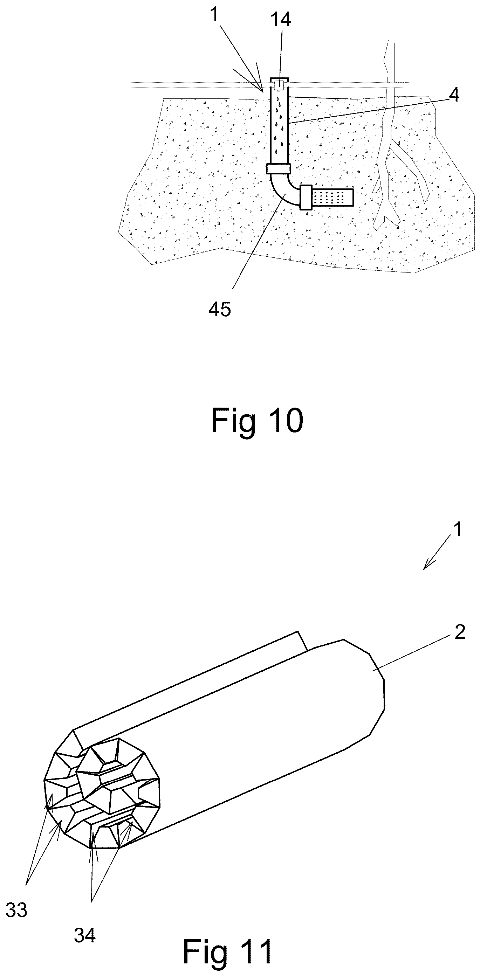

For its part, an applicatorin the form of a band (3) or sheet (2) may comprise irrigation pipes (8)
(tape or drip irrigation pipes) directly distributed and coupled along its surface (see Fig. 6), ready to be unwound and installed with the built-in irrigation system. They are spread over the ground and can be covered with prepared soil or substrate (15), or left directly on the surface, depending on the type of sowing or treatment required. Likewise, the band-shaped applicator (3) can comprise an alveolar or multiwall sheet shape with a grooved section (see alveoli (33) and channels (34) in Fig. 10), so that its design allows it to be rolled up like a parchment. Depending on the length and width in which the sheet is cut, when it is rolled up, an applicator of greater diameter and height will be obtained, tailored to the consumer.

Having sufficiently described the nature of the invention, as well as the method of carrying it out in practice, it must be stated that the provisions indicated above and represented in the accompanying drawings are susceptible of modifications in detail as long as they do not alter the fundamental principle.

## Claims

1. Agricultural applicator (1), which is coupled to the dripper of a drip pipe, **characterized in that it** comprises a body in the form of a sheet (2), band (3) or pipe (4) and carried out in biopolymers, with outlet holes (10, 11) of the element to be applied.

2. Agricultural applicator (1) according to claim 1, **comprising** additional organic or mineral fillers selected from:
- hygroscopic mineral or vegetable loads,
- fertilizer loads.
- seed loads.

3. Agricultural applicator (1) according to any of the preceding claims, **comprising** vegetable fillers or reinforcing fibers.

4. Agricultural applicator (1) according to any of the preceding claims, **comprising** several layers of biopolymers of different degradability.

5. Agricultural applicator (1) according to any of the preceding claims, **wherein** the applicator is tube-shaped (4) and has a minimum length of 15 centimeters.

6. Agricultural applicator (1) according to claim 5, **wherein** the tube-shaped applicator (4) comprises upper die-cuts (40) that form retainers for drip pipe.

7. Agricultural applicator (1) according to claim 6, **wherein** the die-cuts (40) have progressive sections according to cut-outs (40a, 40b).

8. Agricultural applicator (1) according to any of claims 5 to 7, **wherein** the tube-shaped applicator (4) comprises linear (10) or point (11) irrigation outlet holes.

9. Agricultural applicator (1) according to any of claims 5 to 8, wherein the tube-shaped applicator (4) comprises a cap (44).

10. Agricultural applicator (1) according to any one of claims 5 to 9, wherein the tube-shaped applicator (4) is rigid or flexible.

11. Agricultural applicator (1) according to any one of claims 5 to 10, **wherein** the tube shaped applicator (4) is straight or curved.

12. Agricultural applicator (1) according to any of claims 5 to 11, **wherein** the tube-shaped applicator (4) comprises siphon-shaped accessories

13. Agricultural applicator (1) according to any of claims 5 to 12, **wherein** the rigid tube shaped applicator (4) comprises elbow-shaped (45) or curved accessories.

14. Agricultural applicator (1) according to any of claims 1 to 4, **wherein** the applicator is in the form of a band (3) or sheet (2) and comprises irrigation pipes (8) directly distributed and coupled along its surface..

15. Agricultural applicator (1) according to claim 14, wherein the band-shaped applicator (3) comprises an alveolar or multiwall sheet shape with a grooved section.
